# EUROPÄISCHE PATENTSCHRIFT

(11) **EP 3 224 165 B1**
(45) Veröffentlichungstag und Bekanntmachung des Hinweises auf die Patenterteilung: **15.12.2021**
(21) Anmeldenummer: 15787579.0
(22) Anmeldetag: 28.10.2015
(51) Int. Cl.: B65G 47/86

(54) **VORRICHTUNG ZUM TRANSPORTIEREN VON BEHÄLTERN**
DEVICE FOR TRANSPORTING CONTAINERS
DISPOSITIF DE TRANSPORT DE CONTENANTS

(30) Priorität: 26.11.2014 DE 102014117358
(43) Veröffentlichungstag der Anmeldung: 04.10.2017
(73) Patentinhaber: KHS GmbH, 44143 Dortmund (DE)
(72) Erfinder: FAHLDIECK, Andreas, 55743 Idar-Oberstein (DE); MALLITZKI, Nils, 55469 Simmern (DE)
(86) Internationale Anmeldenummer: PCT/EP2015/075045
(87) Internationale Veröffentlichungsnummer: WO 2016/083065

(56) Entgegenhaltungen:
- EP-A1- 2 138 434
- WO-A1-2009/135597
- DE-A1-102008 055 616
- US-B1- 8 672 376

## Beschreibung

Die Erfindung bezieht sich auf eine Vorrichtung gemäß Oberbegriff Patentanspruch 1 und dabei speziell auf eine Vorrichtung zum Transportieren von Behältern, insbesondere auch von Flaschen, bevorzugt auch von PET-Flaschen, in Behälterbehandlungsanlagen.

Behälterbehandlungsanlagen sind in unterschiedlichen Ausführungen bekannt, z.B. als Füllmaschinen, Etikettiermaschinen, Inspektionsmaschinen oder Rinser, wobei diese Anlagen auch unterschiedlichste Vorrichtungen zum Transportieren von Behältern aufweisen.

Eine Vorrichtung mit den Merkmalen des Oberbegriffs des Patentanspruchs 1 ist bekannt (DE 10 2005 014 838 A1). Bei der bekannten Vorrichtung, die an einem umlaufend antreibbaren Transportelement mehrere Behälterträger in Form von Behältergreifern aufweist, sind die die Greiferarme in ihre Schließstellung vorspannenden und mit einem Sperrelement zusammenwirkenden Federelemente der Behältergreifer von rückwärtigen, federelastischen Verlängerungen der einstückig mit diesen Verlängerungen hergestellten Greiferarme gebildet. Dies hat u.a. den Nachteil, dass hierdurch die Werkstoffauswahl für die Herstellung der Greiferarme stark eingeschränkt ist. Das jeweilige Steuer- oder Sperrelement ist ein Exzenter, gegen den sich die rückwärtigen Verlängerungen Greiferarme abstützen und der zur Steuerung zwischen einem sperrenden Zustand und einem freigebenden Zustand um eine Achse parallel zur Schwenkachse der Greiferarme gedreht werden muss.

Bekannt ist auch eine Vorrichtung (DE 10 2012 011 367 A1), die an einem um eine Maschinenachse umlaufend antreibbaren Transportelement mehrere Behältergreifer mit jeweils zwei durch Federkraft ihre Schließstellung vorspannte Greiferarme aufweist. Jedem Behältergreifer ist ein Verschließelement zugeordnet, welches zum Sperren der Greiferarme kurvengesteuert, radial zur Maschinenachse und gegen die Wirkung einer Rückstellfeder in eine Schließposition bewegbar ist, in der das Verschließelement die beiden Greiferarme reiterartig übergreift und diese dadurch gegen ein Öffnen, d.h. gegen ein Auseinander-Bewegen sperrt. Es erfolgt also ein tatsächliches formschlüssiges Sperren der Greiferarme durch das Verschließelement.

Bekannt ist weiterhin ein Behältergreifer (DE 297 13 510 U), bei dem an einer Tragplatte schwenkbar gelagerte Greiferarme vorgesehen sind, die durch eine Druckfeder in eine Schließstellung vorgespannt sind. Die Behälter können dabei über Eintrittsschrägen an den Vorderseiten der Greiferarme unter Zusammendrücken der Feder in eine von den Greiferarmen und zwischen diesen gebildete Behälteraufnahme eingeschoben und umgekehrt aus dieser Behälteraufnahme wieder ausgezogen werden.

Bekannt ist weiterhin ein Behältergreifer (EP 2 279 143 A1), dessen Greiferarme kostengünstig, einfach und sogar werkzeuglos auswechselbar sind. Dies wird dadurch erreicht, dass zwischen Lagerenden der Greiferarme ein Fixierelement positioniert ist, wobei die Lagerenden eine Randausnehmung aufweisen. Durch Schwenken der Greiferarme in eine extreme Öffnungslage und durch vorheriges Entspannen einer die Schließkraft der Greiferarme erzeugenden Zugfeder werden die Greiferarme aus der Fixierung gelöst, so dass sie leicht und werkzeuglos abnehmbar sind. Weiterhin weist ein Tragkörper zum Befestigen des jeweiligen Behältergreifers am Transportelement verformbare Montagelaschen aus einem elastischen Material auf. Zum Schluss offenbart WO 2009 135597 A1 eine ähnliche Vorrichtung wie im Anspruch 1 definiert, wobei die Elemente, die sich an der Steuerfläche abstützen, jedoch nicht verformbar sind und daher keine Federelemente sind. Die Federungsfunktion wird nämlich dank einer anderen Feder realisiert.

Aufgabe der Erfindung ist es, eine Vorrichtung zum Transport von Behältern aufzuzeigen, die bei vereinfachter konstruktiver Ausbildung insbesondere auch eine vereinfachte Steuerung des jeweiligen Behältergreifers und dessen Greiferarme zwischen dem sperrenden und freigebenden Zustand ermöglicht.

Zur Lösung dieser Aufgabe ist eine Vorrichtung entsprechend dem Patentanspruch 1 ausgebildet.

"Freigebender Zustand" bedeutet im Sinne der vorliegenden Erfindung denjenigen Zustand des jeweiligen Steuer- oder Sperrelementes und damit des betreffenden Behältergreifers, in dem die Greiferarme durch die Federkraft der Federelemente in ihrer Schließstellung nur so stark vorgespannt sind, dass eine sichere Übergabe der Behälter an die Behältergreifer sowie auch eine sichere Abgabe der Behälter von den Behältergreifern jeweils durch Auseinanderbewegen der Greiferarme gegen die Federkraft möglich ist. "Sperrender Zustand" bedeutet im Sinne der Erfindung denjenigen Zustand des jeweiligen Sperrelementes und damit des betreffenden Behältergreifers, in dem die Greiferarme des betreffenden Behältergreifers mit einer gegenüber dem freigegebenen Zustand erhöhten Federkraft in ihre Schließstellung vorgespannt sind. Ein tatsächliches formschlüssiges Sperren erfolgt hierbei grundsätzlich nicht.

Die Behältergreifer der erfindungsgemäßen Vorrichtung sind bevorzugt für eine hängende Halterung der Behälter an einen die Behälteröffnung bildenden Behälterhals und/oder an einem dortigen Ring oder Flansch (Neckring) ausgebildet.

In Weiterbildung der Erfindung sind die Vorrichtung oder der Behältergreifer beispielsweise so ausgeführt,
dass die Steuer- oder Sperrelemente an ihren in Richtung der Sperrelementachse voneinander beabstandeten Enden weitere Steuerflächen für mit dem Transportelement nicht mitbewegte Steuerkurven zum Bewegen der Steuer- oder Sperrelemente zwischen der ersten und zweiten Position bilden,
   oder
dass für jeden Behältergreifer nur ein Sperrelement vorgesehen ist,
   oder
dass sich die Federelemente jedes Behältergreifers an einem gemeinsamen Sperrelement beidseitig abstützen, d.h. an wenigstens zwei um die Sperrelementachse gegen einander versetzten oder sich in Bezug auf die Sperrelementachse einander gegenüber liegenden Bereichen des Sperrelement oder der Steuerfläche,
   oder
dass die Sperrelementachsen parallel oder im Wesentlichen parallel zu den Schwenkachsen der Greiferarme orientiert sind,
   oder
dass die Greiferarme jedes Behältergreifers an einem Ende eine Behälteraufnahme zum Greifen und Halten des jeweiligen Behälters, vorzugsweise an einem eine Behälteröffnung aufweisenden Behälterhals bilden,
   oder
dass sich der Steuerbereich des wenigstens einen Steuer- oder Sperrelementes jedes Behältergreifers auf der der Behälteraufnahme abgewandten Seite von Schwenkachsen der Greiferarme befindet,
   oder
dass das Steuer- oder Sperrelement ein Steuer- oder Sperrbolzen ist,
   oder
dass der zweite Abschnitt der Steuerfläche einen größeren Abstand von der Sperrelementachse aufweist als der erste Abschnitt dieser Steuerfläche,
   oder
dass der erste Abschnitt ein kreiszylinderförmiger oder im Wesentlichen kreiszylinderförmiger Abschnitt mit kleinerem Durchmesser und der zweite Abschnitt ein kreiszylinderförmiger oder im Wesentlichen kreiszylinderförmiger Abschnitt mit vergrößertem Durchmesser sind,
   oder
dass die beiden Greiferarme jedes Behältergreifers jeweils an einem eigenen Gelenkbolzen schwenkbar gelagert sind,
   oder
dass die Gelenkbolzen in einer gemeinsamen Aufnahme gehalten sind, welche beispielsweise zum vereinfachen Montieren und Demontieren des jeweiligen Behältergreifers durch Verrasten am Transportelement gehalten ist,
   oder
dass die Federelemente Federarme sind, die mit einem ersten Federarmende mit jeweils einem Greiferarm verbunden sind und mit einem zweiten Federarmende jeweils gegen die Steuerfläche eines Steuer- oder Sperrelementes anliegen,
   oder
dass die Federarme doppelarmige Federarme sind, die zwischen ihren Federarmenden schwenkbar gehalten sind, vorzugsweise um jeweils eine Achse achsgleich mit der Schwenkachse des zugehörigen Greiferarms oder an einem gemeinsamen Gelenkbolzen mit dem zugehörigen Greiferarm,
   oder
dass die Federarme für ihre schwenkbare Lagerung jeweils eine Lagerbuchse, vorzugsweise eine angeformte Lagerbuchse aufweisen,
   oder
dass jeder Behältergreifer hinsichtlich seiner Federarme so ausgebildet ist, dass sich die Lagerbuchse des einen Federarms an der dem anderen Federarm abgewandten Außenseite befindet,
   oder
dass jeder Behältergreifer hinsichtlich seiner Federarme so ausgebildet ist, dass die Lagerbuchse jedes Federarms über dessen Außenseite vorsteht, oder
dass die Federelemente aus einem federelastischen Kunststoff oder aus einem federelastischen Metall bestehen und vorzugsweise monolithisch, einstückig mit einer Lagerbuchse hergestellt sind,
   oder
dass die Greiferarme aus Kunststoff oder Metall gefertigt sind,
   oder
dass die Steuer- oder Sperrelemente aus Metall oder Kunststoff gefertigt sind, oder
dass das Transportelement ein um eine vertikale Maschinenachse umlaufend antreibbares Transportelement oder ein entsprechender Rotor ist,
   oder
dass die Steuer- oder Sperrelemente jeweils bezogen auf die Maschineachse gegenüber den Schwenkachsen der Greiferarme radial nach innen versetzt angeordnet sind,
   oder
dass die Federarme mit einem ersten Bereich oder einer ersten an einem Federarmende ausgebildeten Fläche jeweils gegen die Steuerfläche eines Steuer- und/oder Sperrelementes anliegen und mit einem zweiten Bereich oder einer zweiten, ebenfalls an dem Federarmende ausgebildeten Fläche jeweils auf einen Greiferarm einwirken,
   oder
dass die beiden Bereiche oder Flächen einander gegenüberliegend am Federarmende vorgesehen sind und hierbei das jeweilige Federarmende zwischen diesen Bereichen oder Flächen federelastisch ausgebildet ist, und zwar vorzugsweise durch eine zumindest eine Ausnehmung formende doppelwandige Ausbildung,
   oder
dass die Greiferarme jeweils doppelarmig mit wenigstens zwei von einer Schwenkachse der Greiferarme sich gegenläufig wegerstreckenden Greiferarmabschnitten ausgeführt sind, von denen ein erster Greiferarmabschnitt zum Greifen und Halten der Behälter ausgebildet ist, und dass das wenigstens eine Federelement oder dessen Federarme mit dem anderen Greiferarmabschnitt oder einer an diesem Greiferarmabschnitt vorgesehenen Federelementanlage zusammenwirken,
wobei die vorgenannten Merkmale nicht nur einzeln, sondern auch in beliebiger Kombination verwendet sein können.

"Behälter" sind im Sinne der Erfindung insbesondere Dosen, Flaschen, Fässer, auch KEGs, jeweils aus Metall, Glas und/oder Kunststoff, vorzugsweise aus PET (Polyethylenterephthalat).

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen erläutert. Es zeigen:
Fig. 1 und 2 in vergrößerter Darstellung und in Seitenansicht einen der an einem Transportelement vorgesehenen Behältergreifer zusammen mit einem Behälter, und zwar in seinem am Transportelement befestigten Zustand bzw. nach dem Abnehmen von dem Transportelement;
Fig. 3 und 4 den Behältergreifer der Figur 1 in perspektivischer Darstellung, und zwar im freigebenden Zustand (Fig. 3) und im sperrender Zustand (Fig. 4);

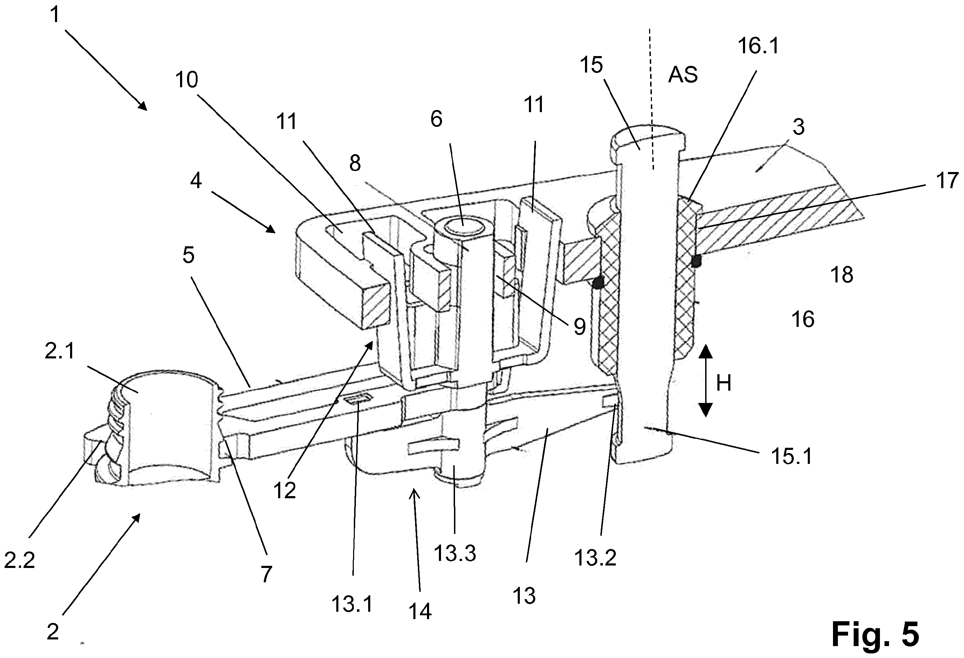

Fig. 5 den Behältergreifer der Figur 1 in perspektivischer Darstellung und im Längsschnitt;

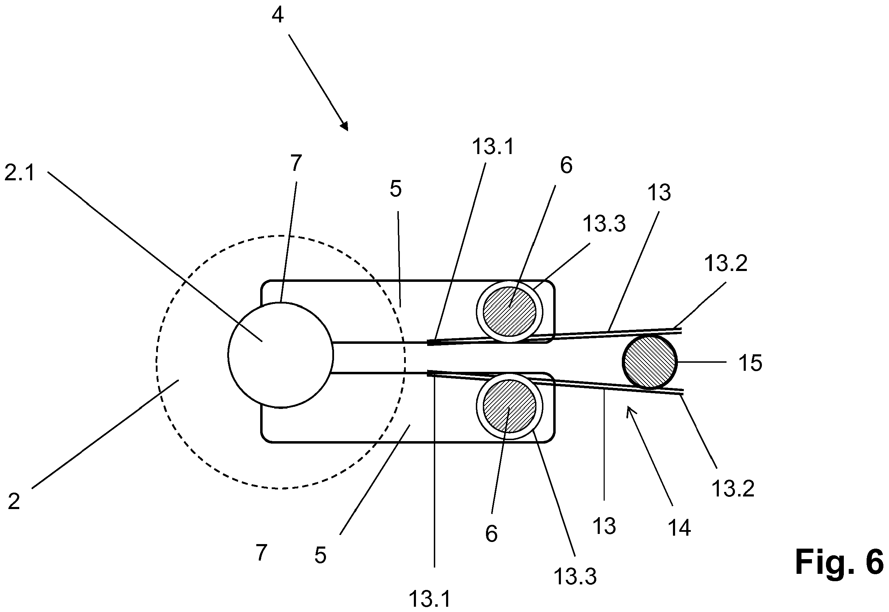

Fig. 6 eine schematische Funktionsdarstellung des Behältergreifers der Figur 1;
Fig. 7 in perspektivischer Darstellung und in Draufsicht eine weitere Ausführungsform des Behältergreifers, zusammen mit einer Teildarstellung des Transportelementes;
Fig. 8 in perspektivischer Darstellung und in Unteransicht den Behältergreifer der Figur 7, zusammen mit der Teildarstellung des Transportelementes;
Fig. 9 in Einzeldarstellung und in Draufsicht ein Federelement des Behältergreifers der Figuren 7 und 8.

In den Figuren ist 1 eine Vorrichtung zum Transportieren von Behältern 2 in Form von Flaschen, insbesondere von großvolumigen Flaschen, speziell auch solchen aus PET dargestellt. Die Vorrichtung 1 besteht in bekannter Weise aus einem um eine vertikale Maschinenachse MA umlaufend (Pfeil A) antreibbaren Rotor oder Transportelement 3. Am Umfang des beispielsweise scheibenartig oder im Wesentlichen scheibenartig ausgebildeten Transportelementes 3 sind in gleichmäßigen Winkelabständen um die Maschinenachse MA gegeneinander versetzt Behälterträger in Form von Behältergreifern 4 vorgesehen, und zwar für eine hängende Halterung des jeweiligen Behälters 2 an einem unterhalb oder oberhalb hängende Halterung des jeweiligen Behälters 2 an einem unterhalb oder oberhalb seiner Behälteröffnung 2.1 am Behälterhals ausgebildeten Flansch 2.1 (Neckring). Jeder Behältergreifer 4 umfasst u.a. zwei Greiferarme 5, die an einem bezogen auf die Maschinenachse MA radial innenliegenden Ende jeweils an einem Gelenkbolzen 6 um eine Achse parallel oder im Wesentlichen parallel zur Maschinenachse MA schwenkbar gelagert sind, und zwar für ein gegensinniges Auseinander-Schwenken zum Öffnen des betreffenden Behältergreifers 4 sowie für ein gegensinniges Aufeinander-Zu-Schwenken zum Schließen des betreffenden Behältergreifers 4. An ihren bezogen auf die Maschinenachse MA radial außenliegenden Enden sind die Greiferarme 5 mit Ausnehmungen 7 versehen, die sich zu einer Behälteraufnahme in der Weise ergänzen, dass der jeweilige Behälter 2 von den beiden Greiferarmen 5 an seinem Behälterhals auf einem Winkelbereich größer 180° klammerartig umgriffen wird. Ebenso wie die Gelenkbolzen 6 sind auch die Greiferarme 5 jedes Behältergreifers 4 in Umfangsrichtung oder Drehrichtung A des Transportelementes 3 gegeneinander versetzt. Wie dargestellt sind die Greiferarme 5 jeweils unterhalb des Transportelementes 3 vorgesehen, stehen aber mit ihren bezogen auf die Maschinenachse MA radial außenliegenden Enden über den Umfang des Transportelementes 3 vor.

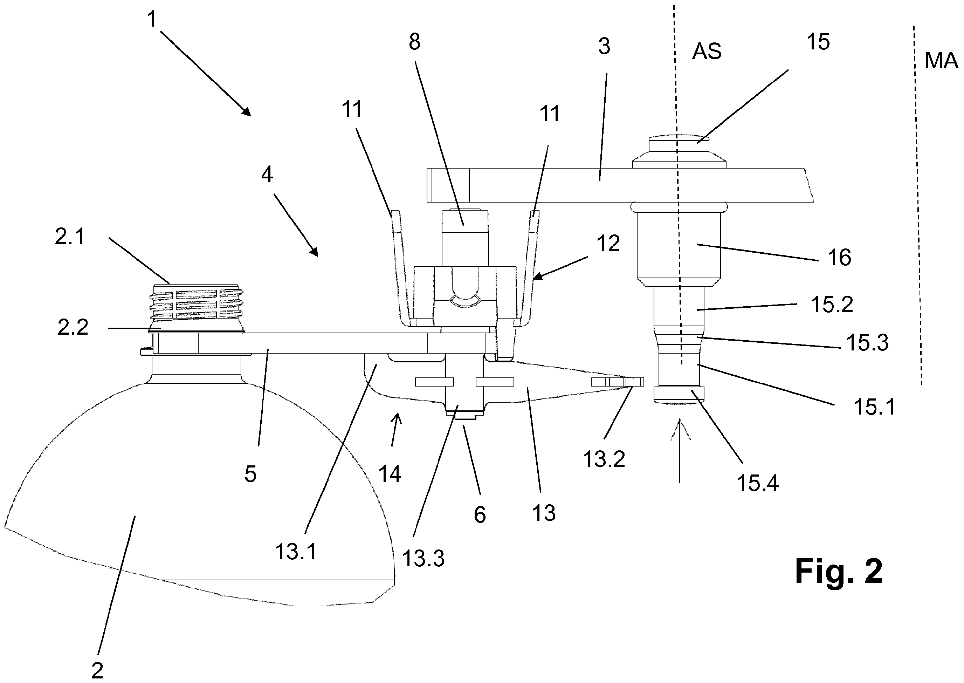

Die Gelenkbolzen 6 sind in einem Lagerstück oder in einer Aufnahme 8 des jeweiligen Behältergreifers 4 gehalten. Die Aufnahmen 8 und damit auch die Behältergreifer 4 sind durch Verrasten am Transportelement 3 befestigt. Hierfür weist das Transportelement 3 an seinem Umfangsbereich überall dort, wo ein Behältergreifer 4 vorgesehen ist, eine erste Ausnehmung oder Öffnung 9 auf, in die die jeweilige Aufnahme 8 von unten her passend oder im Wesentlichen passend eingesetzt ist. Weiterhin weist das Transportelement 9 im Bereich jedes Behältergreifers 4 beidseitig von der Ausnehmung 9 zwei weitere Ausnehmungen oder Öffnungen 10 auf, die bezogen auf die Maschinenachse MA radial gegeneinander sowie auch gegenüber der Ausnehmung 9 versetzt sind. Die beiden Öffnungen 10 dienen zum Verrasten von zwei Flügeln 11 eines vorzugsweise einstückig mit der jeweiligen Aufnahme 8 hergestellten Rastelementes 12 an Transportelement 3, und zwar zum Verrasten der Flügel 11 im Bereich ihrer oberen, freien Enden an Rasten, die an den der Öffnung 9 entfernten Randflächen der Öffnungen 10 vorgesehen sind. Durch das Zusammendrücken der Flügel 11 (Pfeile B der Figur 2) kann die Rastverbindung zwischen dem Transportelement 3 und dem jeweiligen Behältergreifer 4 gelöst werden, sodass dieser dann nach unten vom Transportelement 3 abgenommen werden kann, wie dies in der Figur 2 dargestellt ist. Die Öffnungen 9 und 10 sind jeweils langlochartig ausgeführt und mit ihrer Längserstreckung in Transportrichtung orientiert.

An dem untern, über die Aufnahme 8 vorstehenden Ende jedes Gelenkbolzens 6 ist nicht nur der zugehörige Gelenkarm 5, sondern auch noch ein doppelarmiger Federarm 13 zwischen seinen beiden Federarmenden 13.1 und 13.2 schwenkbar gelagert, und zwar bei der dargestellten Ausführungsform mit einer Lagerbuchse 13.3 und unterhalb des jeweiligen Greiferarms 5. Die Federarme 13 sind jeweils blattfederartig wirkend ausgeführt, und zwar bei der dargestellten Ausführungsform als flache Federarme, die mit ihren Oberflächenseiten in Ebenen parallel oder im Wesentliche parallel zur Achse des zugehörigen Gelenkbolzens 6 angeordnet sind. Weiterhin sind die Federarme 13 bevorzugt so ausgeführt, dass sich die vorzugsweise angeformte Lagerbuchse 13.3 jedes Federarms 13 an dessen dem anderen Federarm 13 abgewandten Außenseite befindet oder die Lagerbuchse 13.3 über diese Außenseite vorsteht. Wie nachstehend noch näher ausgeführt wird, bilden die Federarme 13 auch im Zusammenwirken mit einem Steuer- oder Sperrbolzen 15 ein die beiden Greiferarme 5 in ihre Schließstellung vorspannendes Federelement 14, dessen auf die Greiferarme 5 einwirkende Federkraft abhängig ist von der Position des Steuer- oder Sperrbolzens 15.

Jeder Federarm 13 ist an dem Federarmende 13.1, welches bezogen auf die Maschinenachse MA gegenüber dem zugehörigen Gelenkbolzen 6 radial nach außen versetzt ist, formschlüssig mit dem an demselben Gelenkbolzen 6 schwenkbar gelagerten Greiferarm 5 verbunden, und zwar an einem Greiferarmbereich, der von dem Gelenkbolzen 6 radial beabstandet ist und zwischen dem Gelenkbolzen 6 und dem freien Ende des Greiferarms 5 liegt. Für die formschlüssige Verbindung greift Federarmende 13.1 beispielsweise in eine entsprechende Ausnehmung des Greiferarms 5 ein. Der das Federarmende 13.1 bildende Abschnitt oder Arm des Federarm 13 erstreckt sich somit entlang zumindest einer Teillänge des zugehörigen Greiferarms 5.

Mit seinem anderen Federarmende 13.2, welches von dem Gelenkbolzen 6 in Richtung der Maschinenachse MA wegsteht, liegt jeder doppelarmige Federarm 13 gegen die Mantel- bzw. Steuerfläche des Steuer- oder Sperrbolzens 15 an, und zwar in der Weise, dass sich die Federarmenden 13.2 beider Federarme 13 jedes Behältergreifers 4 an einander gegenüber liegenden Bereichen der Steuerfläche eines gemeinsamen Steuer- oder Sperrbolzens 15 abstützen und hierdurch elastisch verformt eine das Schließen der Greiferarme 5 und damit das Halten des jeweiligen Behälters 2 bewirkende Federkraft erzeugen. Es versteht sich, dass für jeden Behältergreifer 4 ein eigener Steuer- oder Sperrbolzen 15 vorgesehen ist.

Jeder Steuer- oder Sperrbolzen 15 ist mit seiner Achse AS parallel oder im Wesentlichen parallel zu den Achsen der Gelenkbolzen 6 orientiert und in Richtung der Achse AS verschiebbar (Doppelpfeil H) in einer Lagerhülse 16 gehalten, die in eine Öffnung 17 des Transportelementes 3 eingesetzt ist. Zur axialen Sicherung ist die Lagerhülse 16 mit einem Flansch 16.1 versehen, der gegen eine Seite, d.h. bei der dargestellten Ausführungsform gegen die Oberseite des Transportelementes 3 anliegt. An der anderen Seite, d.h. bei der dargestellten Ausführungsform an der Unterseite des Transportelementes 3 ist die Lagerhülse 16 durch einen aufgeschobenen, in eine Nut der Lagerhülse 16 eingreifenden und gegen das Transportelement anliegenden elastischen Haltering 18 gesichert.

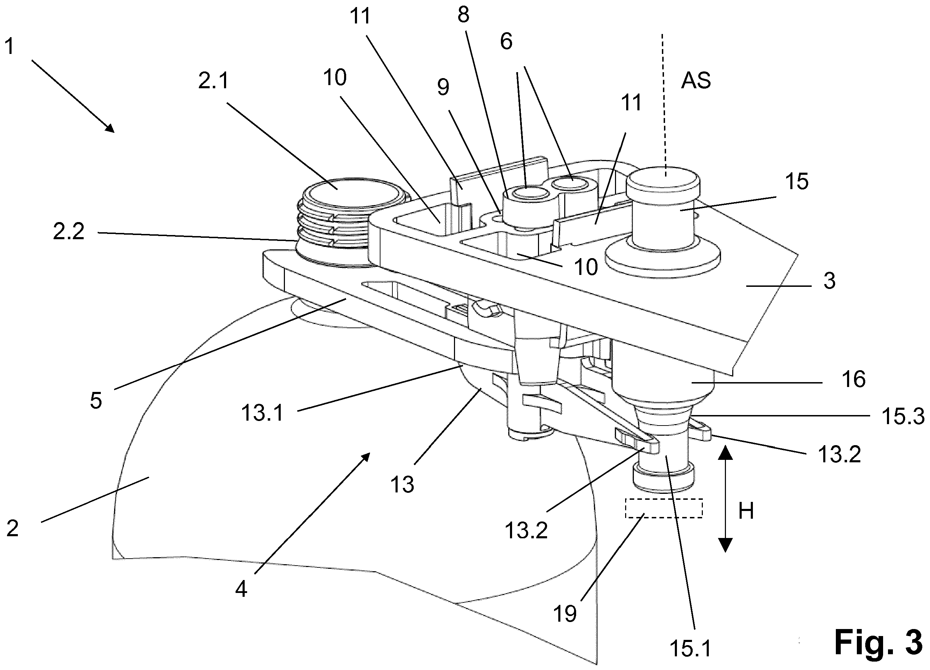

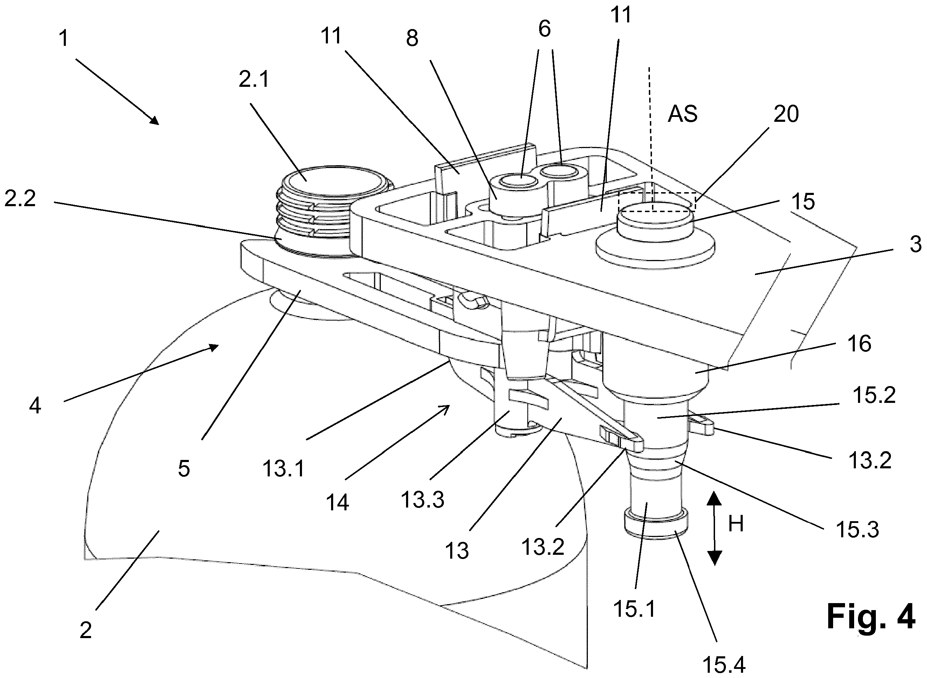

Wie insbesondere den Figuren 3 und 4 zu entnehmen, bildet jeder Steuer- oder Sperrbolzen 15 an seinem unteren, aus der Lagerhülse 16 vorstehenden Bereich die mit den beiden Federarmenden 13.2 zusammenwirkende Steuerfläche. Diese ist mit einem kreiszylinderförmigen Abschnitt 15.1 mit kleinerem Durchmesser und mit einem kreiszylinderförmigen Abschnitt 15.2 ausgeführt, der einen im Vergleich zum Abschnitt 15.1 größeren Durchmesser aufweist und über einen kegelförmigen Abschnitt 15.3 an den Abschnitt 15.1 anschließt, der bei der dargestellten Ausführungsform auf das untere, freie Ende des Steuer- oder Sperrbolzens 15 folgt.

Bei der Übergabe eines Behälters 2 an einen Behältergreifer 4 sowie bei der Entnahme eines Behälters 2 von einem Behältergreifer 4 befindet sich der Steuer- oder Sperrbolzen 15 dieses Behältergreifer 4 in der in der Figur 3 dargestellten Position, in der die beiden Federarmenden 13.2 gegen den Abschnitt 15.1 anliegen und die dem freigebenden Zustand entspricht. Die hierbei über die Federarme 13 auf die Greiferarme 5 ausgeübte Federkraft reicht aus, um den jeweiligen Behälter 2 an einem Behältereinlauf der Vorrichtung 1 durch Einschnappen der Greiferarme 5 am Behälterhals sicher aufzunehmen, gleichzeitig aber auch am Behälterauslauf der Vorrichtung 1 ein Abnehmen des Behälters 2 zu ermöglichen, und zwar durch federndes Auseinanderbewegen der Greiferarme 5.

Nach der Aufnahme eines Behälters 2 wird der sich vertikal erstreckende Steuer- oder Sperrbolzen 15 des betreffenden Behältergreifers 4 durch axiales Verschieben in die dem sperrenden Zustand entsprechende Position bewegt, in der die beiden Federarmenden 13.2 dann beidseitig gegen den Abschnitt 15.2 anliegen und dadurch eine erhöhte, die Greiferarme 5 in ihre schließende Position vorspannende und den Behälter 2 haltende Federkraft durch die Federarme 13 bzw. das Federelement 14 erzeugt wird.

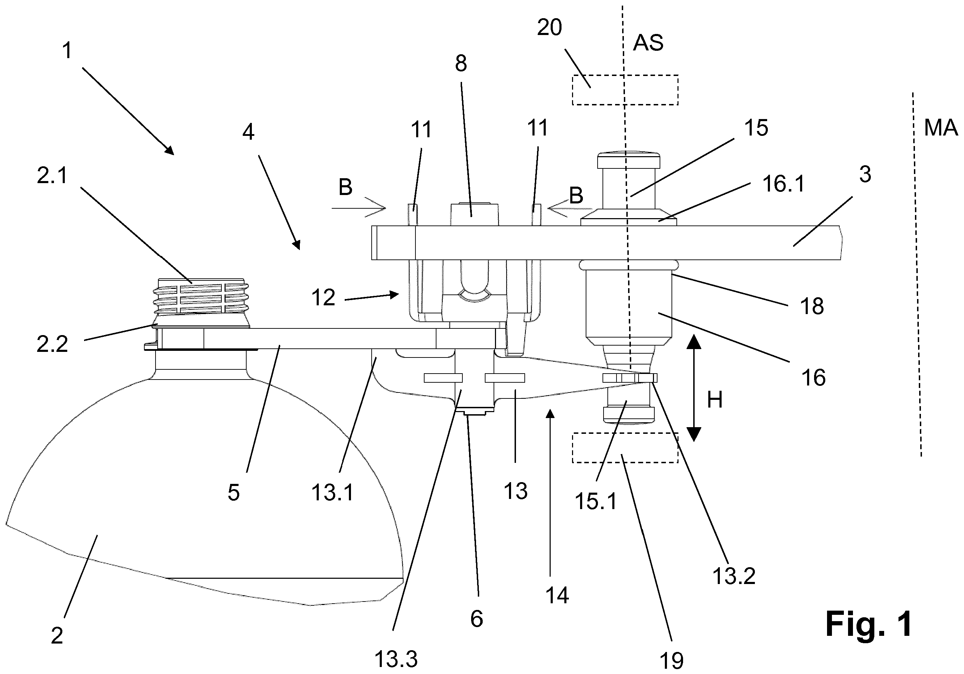

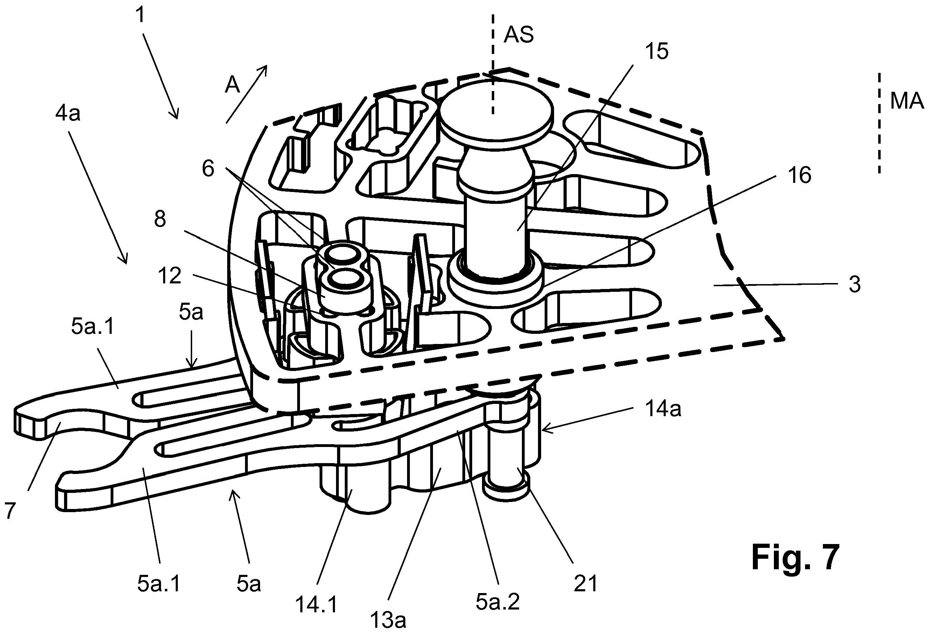

Die Figuren 7 ― 9 zeigen als weitere Ausführungsform die Vorrichtung 1 mit einem Behältergreifer 4a, der sich von dem Behältergreifer 4 der Figuren 1 ― 6 im Wesentlichen dadurch unterscheidet, dass er anstelle der Greiferarme 5 die beiden Greiferarme 5a und anstelle der von den beiden Federarmen 13 gebildeten Federeinrichtung 14 eine Federeinrichtung 14a aufweist, die einstückig mit zwei Federarmen 13a ausgeführt ist.

Der Behältergreifer 4a, der wiederum zusammen mit einer Vielzahl gleichartiger Behältergreifer 4a am Umfang des um die vertikale Maschinenachse MA umlaufenden Transportelementes 3 vorgesehen ist, ist ebenfalls für eine hängende Halterung des jeweiligen Behälters 2 an seinem unterhalb der Behälteröffnung ausgebildeten Behälterflansch (Neck-Ring) ausgebildet. Die beiden Greiferarme 5a sind weiterhin an dem jeweiligen Gelenkbolzen 6 um die Achse parallel oder im Wesentlichen parallel zur Maschinenachse MA schwenkbar gelagert, und zwar für das gegensinnige Auseinanderschwenken zum Öffnen des Behältergreifers 4a sowie für das gegensinnige Aufeinander-Zu-Schwenken zum Schließen des Behältergreifers 4a. Die Gelenkachsen 6 sind in dem Lagerstück oder der Aufnahme 8 des Behältergreifers 4a gehalten. Der jeweilige Behältergreifer 4a ist durch Einsetzen der Aufnahme 8 in die Öffnung 9 und durch Verrasten des Rastelementes 12 am Transportelement 3 befestigt, und zwar in der gleichen Weise, wie dies im Zusammenhang mit den Figuren 1 ― 6 beschrieben wurde. Im montierten Zustand sind die beiden Greiferarme 5a wiederum unterhalb des Niveaus der Unterseite des Transportelementes 3 angeordnet.

An ihrem bezogen auf die Maschinenachse MA radial außenliegenden Ende sind die Greiferarme 5a mit den Ausnehmungen 7 versehen, die sich zu einer Behälteraufnahme in der Weise ergänzen, dass der jeweilige Behälter 2 von den beiden Greiferarmen 5 an seinem Behälterhals auf einem Winkelbereich von idealerweise größer 180° klammerartig umgriffen wird.

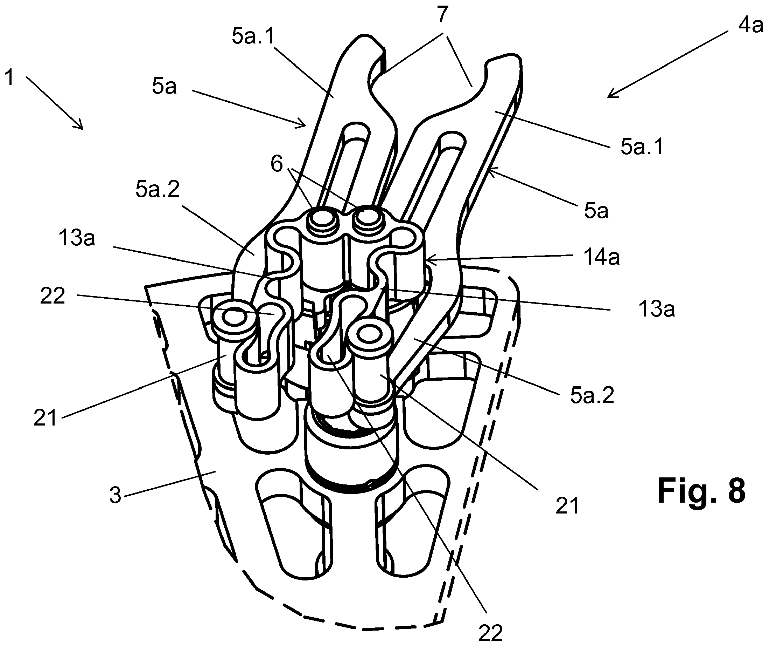

Wie die Figuren 7 und 8 zeigen, sind die Greiferarme 5a jeweils doppelarmig ausgeführt, und zwar mit einem Arm oder Greiferarmabschnitt 5a.1, der sich gegenüber dem zugehörigen Gelenkbolzen 6 bezogen auf die Maschinenachse MA radial nach außen erstreckt und die Ausnehmung 7 aufweist, und mit einem Arm oder Greiferarmabschnitt 5a.2, der sich gegenüber dem zugehörigen Gelenkbolzen 6 und bezogen auf die Maschinenachse MA radial oder im Wesentlichen radial nach innen erstreckt. An dem den zugehörigen Gelenkbolzen 6 entfernt liegenden, freien Ende ist an dem Greiferarmabschnitt 5.2 eine Federelementanlage 21 bevorzugt in Form einer Rolle vorgesehen, die um ihre Achse parallel oder im Wesentlichen parallel zu der Achse der Gelenkbolzen 6 drehbar gelagert ist. Die Federelementanlage 21 befindet sich dabei an der dem Transportelement 3 abgewandten Unterseite des Greiferarmes 5a.

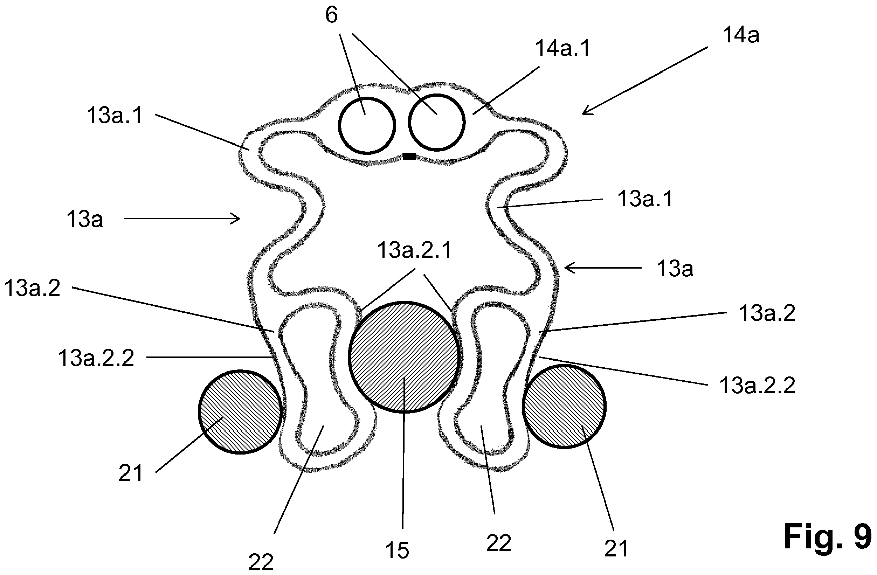

Wie insbesondere die Figur 9 zeigt, besteht das U-förmige, einstückige Federelement 14a aus u.a. den beiden Federarmen 13a, die über ein Verbindungsstück 14a.1 zu dem einstückigen, bügelförmigen Federelement 14a verbunden sind. Das Verbindungsstück 14a.1 weist Durchführungsöffnungen zur Aufnahme von mindestens einem Gelenkbolzen auf, hier für zwei Gelenkbolzen 6. Die beiden Federarme 13a sind jeweils hochkant ausgebildet, d.h. sie besitzen in einer Achsrichtung senkrecht zu ihrer Längserstreckung und parallel zu den Achsen der Gelenkbolzen 6 eine Breite oder Höhe, die wesentlich größer ist als die Materialdicke der Federarme 13a. Im Detail sind die Federarme 13a so ausgeführt, dass sie jeweils ausgehend von dem Verbindungsabschnitt 14a.1 einen Federarmabschnitt 13a.1 bilden, der bei der dargestellten Ausführungsform zur Erzielung einer gewünschten Federwirkung mehrfach gewellt ist, und daran anschließend einen Federarmabschnitt 13a.2, der das freie Ende des jeweiligen Federarms 13a bildet und doppelwandig mit einer Öffnung oder Ausnehmung 22 ausgeführt ist. Diese weist in einer Querschnittsebene senkrecht zu der Achse der Gelenkbolzen 6 einen ovalen, sich in Längsrichtung des jeweiligen Federarms 13a erstreckenden Querschnitt auf und ist in einer Achsrichtung parallel zu den Achsen der Gelenkbolzen 6 beidendig offen. Beidseitig von der Ausnehmung 22 bilden die Federarme 13a jeweils eine innere Fläche 13a.2.1 und eine äußere Fläche 13a.2.2. Diese Flächen 13a.2.1 und 13a.2.2 sind an jedem Federarm 13a von einander beabstandet. Zwischen den Flächen 13a.2.1 und 13a.2.2 ist jeder Federarm 13a oder Federarmabschnitt 13a.2 durch die Ausnehmung 22 federelastisch ausgeführt. Die inneren Flächen 13a.2.1 der beiden Federarme 13a sind einander zugewandt. Die inneren Flächen 13a.2.1 der beiden Federarme 13a sind von einander abgewandt.

Wie insbesondere auch in der Figur 9 angedeutet, wirken die inneren Flächen 13a.1 mit dem Steuer- und Sperrbolzen 15 bzw. mit dessen Abschnitten 15.1 ― 15.3 zusammen. Die äußeren Flächen 13a.2 liegen gegen jeweils eine Federelementanlage 21 an, um die beiden Greiferarme 5a durch das mit den freien Enden der Federarme 13a zwischen den Federelementanlagen 21 angeordnete Federelemente 14a in ihre Schließstellung vorzuspannen.

Der Verbindungsabschnitt 14a.1 ist an den beiden Gelenkbolzen 6 gehalten, die durch diesen Verbindungsabschnitt hindurchgeführt sind, und zwar derart, dass sich das Federelement 14a an der dem Transportelement 3 abgewandten Unterseite der Greiferarme 5a befindet.

Der Steuer- oder Sperrbolzen 15 ist auch bei dieser Ausführungsform wiederum axial, d.h. in Richtung seiner Sperrbolzenachse AS gesteuert bewegbar, und zwar in der Lagerhülse 16 geführt zumindest zwischen einer Position, die dem sperrenden Zustand des Behältergreifers 4a, d.h. der erhöhten Einspann- und Haltekraft des Behälters 2 am Behältergreifer 4a entspricht, und einer Position, die dem freigebenden Zustand des Behältergreifers 4a, d.h. der reduzierten Einspann- und Haltekraft des Behälters 2 am Behältergreifer 4a entspricht.

Im freigebenden Zustand befindet sich der Abschnitt 15.1 des Steuer- oder Sperrbolzen 15 zwischen den beiden inneren Flächen 13a.2.1, sodass die Schließ- oder Haltekraft der Greiferarme 5a nur oder im Wesentlichen nur durch die Federkraft der Federarmabschnitte 13a.1 erzeugt wird. Im sperrenden Zustand liegen die beiden inneren Flächen 13a.1 gegen den Abschnitt 15.2 des Steuer- oder Sperrbolzens 15 an, sodass die Schließkraft der Greiferarme 5a hauptsächlich durch die stark reduzierte elastische Verformbarkeit der die Ausnehmungen 20 aufweisenden Federarmabschnitte 13a.2 bestimmt ist und somit Wesentlich größer ist als die Schließkraft in der dem freigebenden Zustand entsprechenden Position des Steuer- oder Sperrbolzens 15.

Die beschriebene Ausbildung des Federelementes 14a hat nicht nur den Vorteil einer Vereinfachung der Herstellung und Montage durch die einstückige Ausbildung, sondern insbesondere auch den Vorteil, dass in dem freigebenden und sperrenden Zustand die Schließkraft letztlich durch unterschiedliche Federarmabschnitte des Federelementes 14a erzeugt wird, hierdurch große Unterschiede der Federkräfte für den sperrenden und freigebenden Zustand realisierbar und durch entsprechende Formgebung der Federarmabschnitte 13a.1 und 13a.2 die Federkräfte für den sperrenden und freigebenden Zustand zumindest weitestgehend unabhängig von einander einstellbar sind.

Das Bewegen des Steuer- oder Sperrbolzens 15 zwischen seiner dem freigebenden Zustand entsprechenden Position und seiner verschließenden oder dem sperrenden Zustand entsprechende Position erfolgt bei den Behältergreifern 4 und 4a in besonders einfacher Weise kurvengesteuert, d.h. der Steuer- oder Sperrbolzens 15 wird vor Erreichen eines Behältereinlaufs und vor Erreichen eines Behälterauslaufs jeweils durch eine mit dem Transportelement 3 nicht umlaufende Steuerkurve 19 (Figuren 1 und 3) in seine dem freigebenden Zustand entsprechenden Position bewegt, d.h. bei den dargestellten Ausführungsformen angehoben, und nach dem Passieren des Behältereinlaufs durch eine weitere, mit dem Transportelement 3 nicht umlaufende Steuerkurve 20 (Figuren 1 und 4) in seine dem sperrenden Zustand entsprechende Position bewegt, d.h. bei den dargestellten Ausführungsformen abgesenkt. Die Steuerkurven 19 und 20, die auf das untere Ende des Steuer- oder Sperrbolzens 15 (Steuerkurve 19) bzw. auf das obere Ende des Steuer- oder Sperrbolzens 15 (Steuerkurve 20) einwirken, können sehr kurz ausgeführt sein, da der Steuer- oder Sperrbolzens 15 in keine der beiden Positionen vorgespannt und in beiden Positionen jeweils durch die klemmende Wirkung der Federarme 13 ausreichend gesichert ist.

Die Greiferarme 5 und 5a, die Gelenkbolzen 6 sowie auch der Steuer- oder Sperrbolzen 15 bestehen vorzugsweise aus einem metallischen Werkstoff, z.B. Edelstahl, während die Aufnahme 8 vorzugsweise ein Formteil aus Kunststoff ist. Die Federarme 13 und das Federelement 14a sind insbesondere auch gegenüber den Greiferarmen 5 und 5a eigenständige Bauteile und können daher aus einem vom Material der Greiferarme 5 und 5a abweichenden und für Federarme oder Federelemente besonders geeigneten Material, beispielsweise aus einem ausreichend federelastischen Kunststoff oder zumindest teilweise aus einem federelastischen metallischen Werkstoff gefertigt sein, und zwar die Federarme 13 bevorzugt jeweils einstückig mit ihrer Lagerbuchse 13.3.

Ebenso wie der durch Verrasten am Transportelement 3 gehaltene Behältergreifer 4 und 4a kann auch der zugehörige Steuer- oder Sperrbolzen 15 im Bedarfsfall, beispielsweise für Reparatur- und/oder Reinigungszwecke durch einfaches Herausziehen aus seiner Lagerhülse 16 problemlos demontiert werden. Um die Hubbewegung der Steuer- oder Sperrbolzen 15 in die dem freigebenden Zustand entsprechende Position zu begrenzen, sind die Steuer- oder Sperrbolzen 15 jeweils an ihrem unteren Ende und an den Abschnitt 15.1 anschließend mit einem überstehenden Bund 15.4 versehen, gegen den bei einem zu starken Anheben des Sperrbolzens 15 die Federarmenden 13.2 oder die Federarmabschnitte 13a.2 zur Anlage kommen.

Unabhängig von bestehenden Unterschieden ist den Behältergreifern und dabei insbesondere auch den beschriebenen Ausführungsformen gemeinsam, dass im sperrenden Zustand der Behältergreifer deren Greiferarme in der Schließstellung durch den jeweiligen Steuer- oder Sperrbolzen nicht starr oder formschlüssig Sperrbolzen nicht starr oder formschlüssig blockiert sind, sondern mit einer allerdings erhöhten Federkraft in die Schließstellung vorgespannt sind.

Die Erfindung wurde voranstehend an Ausführungsbeispielen erläutert. Es versteht sich, dass zahlreiche Änderungen sowie Abwandlungen innerhalb der Reichweite der Ansprüchen möglich sind. So ist es insbesondere auch möglich, anstelle der Federarme 13 oder des Federelementes 14a andere Federelemente vorzusehen, die ebenfalls jeweils zwischen einem Greiferarm 5 oder 5a und der Steuerfläche des Steuer- oder Sperrbolzens 15 wirken.

### Bezugszeichenliste

- 1: Vorrichtung
- 2: Behälter
- 2.1: Behältermündung
- 2.2: Mündungsflansch
- 3: stern- oder scheibenartiges Transportelement
- 4, 4a: Behältergreifer
- 5, 5a: Greiferarm
- 5a.1, 5a.2: Greiferarmabschnitt
- 6: Gelenkbolzen
- 7: Ausnehmung
- 8: Aufnahme
- 9, 10: Ausnehmung
- 11: Flügel
- 12: Rastelement
- 13, 13a: Federarm
- 13.1, 13.2: Federarmende
- 13.3: Lagerbuchse
- 13a.1, 13a.2: Federarmabschnitt
- 13a.2.1, 13a.2.2: Fläche oder Bereich
- 14, 14a: Federelement
- 15: Steuer- oder Sperrbolzen
- 15.1 ― 15.3: Abschnitt
- 15.4: Bund
- 16: Lagerhülse
- 16.1: Flansch
- 17: Öffnung
- 18: Ring
- 19,20: Steuerkurve
- 21: Federelementanlage
- 22: Ausnehmung
- A: Drehrichtung des Transportelementes 3
- B: Krafteinwirkung zum Lösen des Behältergreifers
- H: Steuerhub des Steuer- oder Sperrbolzens
- AS: Achse des Steuer- oder Sperrbolzens
- MA: Maschinenachse

## Patentansprüche

1. Vorrichtung zum Transportieren von Behältern (2), mit einem Transportelement (3) und mit mehreren an dem Transportelement (3) vorgesehenen Behältergreifern (4, 4a) zum Greifen und Halten der Behälter (2), wobei jeder Behältergreifer (4, 4a) wenigstens zwei schwenkbare Greiferarme (5, 5a), die durch wenigstens ein Federelement (14, 14a) in eine Schließstellung vorgespannt sind, sowie wenigstens ein Steuer- oder Sperrelement (15) aufweist, welches zumindest eine Steuerfläche mit wenigstens zwei Abschnitten (15.1, 15.2) bildet, an der sich die auf die Greiferarme (5, 5a) einwirkenden Federelemente (14) abstützen, und welches zumindest zwischen einer einem freigebenden Zustand des Behältergreifers (4, 4a) entsprechenden ersten Position, in der sich das jeweilige Federelement (14, 14a) an einem ersten Abschnitt (15.1) der Steuerfläche abstützt, und einer einem sperrenden Zustand des Behältergreifers (4, 4a) entsprechenden zweiten Position bewegbar ist, in der sich das jeweilige Federelement (14, 14a) zusätzlich gespannt an einem zweiten Abschnitt (15.2) der Steuerfläche abstützt, wobei das jeweilige Steuer- oder Sperrelement (15) axial in einer Sperrelementachse (AS) zwischen der ersten und zweiten Position bewegbar ist, und dass die Abschnitte (15.1, 15.2) in der Sperrelementachse (AS) aufeinander folgend vorgesehen sind.

2. Vorrichtung nach Anspruch 1, **dadurch gekennzeichnet, dass** die Steuer- oder Sperrelemente (15) an ihren in Richtung der Sperrelementachse (AS) von einander beabstandeten Enden weitere Steuerflächen für mit dem Transportelement (3) nicht mitbewegte Steuerkurven (19, 20) zum Bewegen der Steuer- oder Sperrelemente (15) zwischen der ersten und zweiten Position bilden.

3. Vorrichtung nach Anspruch 1 oder 2, **dadurch gekennzeichnet, dass** für jeden Behältergreifer (4, 4a) nur ein Sperrelement (15) vorgesehen ist und dass sich das wenigstens eine Federelement (14, 14a) des Behältergreifers (4, 4a) an diesem Sperrelement (15) beidseitig abstützt, d.h. an wenigstens zwei um die Sperrelementachse (AS) gegen einander versetzten oder sich in Bezug auf die Sperrelementachse (AS) einander gegenüber liegenden Bereichen des Sperrelementes (15) oder der Steuerfläche.

4. Vorrichtung nach einem der vorhergehenden Ansprüche, **dadurch gekennzeichnet, dass** die Sperrelementachsen (AS) parallel oder im Wesentlichen parallel zu den Schwenkachsen der Greiferarme (5) orientiert sind.

5. Vorrichtung nach einem der vorhergehenden Ansprüche, **dadurch gekennzeichnet, dass** die Greiferarme (5, 5a) jedes Behältergreifers (4, 4a) an einem Ende eine Behälteraufnahme zum Greifen und Halten des jeweiligen Behälters (2) aufweisen, und dass sich der Steuerbereich (15.1 - 15.3) des wenigstens einen Steuer- oder Sperrelementes (15) jedes Behältergreifers (4) auf der der Behälteraufnahme abgewandten Seite von Schwenkachsen (6) der Greiferarme (5, 5a) befindet.

6. Vorrichtung nach einem der vorhergehenden Ansprüche, **dadurch gekennzeichnet, dass** das Steuer- oder Sperrelement ein Steuer- oder Sperrbolzen (15) ist.

7. Vorrichtung nach einem der vorhergehenden Ansprüche, **dadurch gekennzeichnet, dass** der zweite Abschnitt (15.2) der Steuerfläche einen größeren Abstand von der Sperrelementachse (AS) aufweist als der erste Abschnitt (15.1) dieser Steuerfläche, wobei der erste Abschnitt (15.1) ein kreiszylinderförmiger oder im Wesentlichen kreiszylinderförmiger Abschnitt mit kleinerem Durchmesser und der zweite Abschnitt (15.2) ein kreiszylinderförmiger oder im Wesentlichen kreiszylinderförmiger Abschnitt mit vergrößertem Durchmesser sind.

8. Vorrichtung nach einem der vorhergehenden Ansprüche, **dadurch gekennzeichnet, dass** die beiden Greiferarme (5, 5a) jedes Behältergreifers (4, 4a) jeweils an einem eigenen Gelenkbolzen (6) schwenkbar gelagert sind, und dass die Gelenkbolzen (6) in einer gemeinsamen Aufnahme (8) gehalten sind, welche zum vereinfachen Montieren und Demontieren des jeweiligen Behältergreifers (4, 4a) durch Verrasten am Transportelement (3) gehalten ist.

9. Vorrichtung nach einem der vorhergehenden Ansprüche, **dadurch gekennzeichnet, dass** die Federelemente (14) Federarme (13) sind oder jeweils wenigstens zwei Federarme (13a) bilden.

10. Vorrichtung nach Anspruch 9, **dadurch gekennzeichnet, dass** die Federarme (13) mit einem ersten Federarmende (13.1) mit jeweils einem Greiferarm (5) verbunden sind und mit einem zweiten Federarmende (13.2) jeweils gegen die Steuerfläche eines Steuer- oder Sperrelementes (15) anliegen, wobei die Federarme (13) doppelarmige Federarme sind, die zwischen ihren Federarmenden (13.1, 13.2) schwenkbar gehalten sind, und zwar um jeweils eine Achse achsgleich mit der Schwenkachse (6) des zugehörigen Greiferarms (5) oder an einem gemeinsamen Gelenkbolzen (6) mit dem zugehörigen Greiferarm (5).

11. Vorrichtung nach Anspruch 9, **dadurch gekennzeichnet, dass** die Federarme (13a) mit einem ersten Bereich oder einer ersten an einem Federarmende (13a.2) ausgebildeten Fläche (13a.2.1) jeweils gegen die Steuerfläche eines Steuer- und/oder Sperrelementes (15) anliegen und mit einem zweiten Bereich oder einer zweiten, ebenfalls an dem Federarmende (13a.2) ausgebildeten Fläche (13a.2.2) jeweils auf einen Greiferarm (5a) einwirken, wobei die beiden Bereiche oder Flächen (13a.2.1, 13a.2.2) einander gegenüberliegend am Federarmende (13a.2) vorgesehen sind und hierbei das jeweilige Federarmende (13a.2) zwischen diesen Bereichen oder Flächen (13a.2.1, 13a.2.2) federelastisch ausgebildet ist, und zwar durch eine zumindest eine Ausnehmung (20) formende doppelwandige Ausbildung.

12. Vorrichtung nach einem der vorhergehenden Ansprüche, **dadurch gekennzeichnet, dass** die Greiferarme (5a) jeweils doppelarmig mit wenigstens zwei von einer Schwenkachse (6) der Greiferarme (5a) sich gegenläufig wegerstreckenden Greiferarmabschnitten (5a.1, 5a.2) ausgeführt sind, von denen ein erster Greiferarmabschnitt (5a.1) zum Greifen und Halten der Behälter (2) ausgebildet ist, und dass das wenigstens eine Federelement (14a) oder dessen Federarme (13a) mit dem anderen Greiferarmabschnitt (5a.2) oder einer an diesem Greiferarmabschnitt (5a) vorgesehenen Federelementanlage (21) zusammenwirken.

13. Vorrichtung nach Anspruch 12, **dadurch gekennzeichnet, dass** das Federelement (14a) mit seinem Federarmende (13a.2) zwischen den zweiten Greiferarmabschnitten (5a.2) oder den dortigen Federelementanlagen (21) des jeweiligen Behältergreifers (4a) angeordnet ist.

14. Vorrichtung nach einem der vorhergehenden Ansprüche, **dadurch gekennzeichnet, dass** das Federelement (14a) einstückig mit zwei Federarmen (13a) ausgebildet ist, und/oder dass die Federelemente (14, 14a) aus einem federelastischen Kunststoff oder aus einem federelastischen Metall, die Greiferarme (5, 5a) und/oder die Steuer- oder Sperrelemente (15) aus Metall oder Kunststoff gefertigt sind.

15. Vorrichtung nach einem der vorhergehenden Ansprüche, **dadurch gekennzeichnet, dass** das Transportelement (3) ein um eine vertikale Maschinenachse (MA) umlaufend antreibbares Transportelement oder ein entsprechender Rotor ist, und dass die Steuer- oder Sperrelemente (15) jeweils bezogen auf die Maschineachse (MA) gegenüber den Schwenkachsen der Greiferarme (5) radial nach innen versetzt angeordnet sind.

## Claims

1. Device for transporting containers (2), with a transport element (3) and with several container grippers (4, 4a), provided at the transport element (3) for gripping and holding the containers (2), wherein each container gripper (4, 4a) comprises at least two pivotable gripping arms (5, 5a), which are pretensioned by at least one spring element (14, 14a) into a closing position, as well as at least one control element or blocking element (15), which forms at least one control surface with at least two sections (15.1, 15.2), supported on which are the spring elements (14) taking effect on the gripper arms (5, 5a), and which can be moved between at least one first position, corresponding to a releasing state of the container gripper (4, 4a), in which the respective spring element (14, 14a) is supported on a first section (15.1) of the control surface, and a second position corresponding to a blocking state of the container gripper (4, 4a), in which the respective spring element (14, 14a), additionally tensioned, is supported on a second section (15.2) of the control surface, wherein
the respective control element or blocking element (15) can be moved axially in a blocking element axis (AS) between the first and second position, and that the sections (15.1, 15.2) are provided following one another in the blocking element axis (AS).

2. Device according to claim 1, **characterised in that** the control elements or blocking elements (15) form at their ends, separated at a distance from one another in the direction of the blocking element axis (AS), further control surfaces for control cams (19, 20) which are not moved with the transport element (3), for moving the control elements or blocking elements (15) between the first and second positions.

3. Device according to claim 1 or 2, **characterised in that**, for each container gripper (4, 4a), only one blocking element (15) is provided, and that the at least one spring element (14, 14a) of the container gripper (4, 4a) is supported on both sides on this blocking element (15), i.e. on at least two regions of the blocking element (15) offset against one another about the blocking element axis (AS), or lying opposite one another in relation to the blocking element axis (AS), or on the control surface.

4. Device according to any one of the preceding claims, **characterised in that** the blocking element axes (AS) are oriented parallel or essentially parallel to the pivot axes of the gripper arms (5).

5. Device according to any one of the preceding claims, **characterised in that** the gripper arms (5, 5a) of each container gripper (4, 4a) comprise, at one end, a container receiver for gripping and holding the respective container (2),
and that the control region (15.1 ― 15.3) of the at least one control element or blocking element (15) of each container gripper (4) is located on the side of the pivot axes (6) of the gripper arms (5, 5a) facing away from the container receiver.

6. Device according to any one of the preceding claims, **characterised in that** the control element or blocking element is a control or blocking bolt (15).

7. Device according to any one of the preceding claims, **characterised in that** the second section (15.2) of the control surface exhibits a greater distance interval from the blocking element axis (AS) than the first section (15.1) of this control surface, wherein the first section (15.1) is a section which is formed as a circular cylinder or essentially as a circular cylinder with a smaller diameter, and the second section (15.2) is a section which is formed as a circular cylinder or essentially as a circular cylinder with an enlarged diameter.

8. Device according to any one of the preceding claims, **characterised in that** both the gripper arms (5, 5a) of each container gripper (4, 4a) are in each case mounted such as to be pivotable at an individual jointed bolt (6), and that the jointed bolts (6) are held in a common receiver (8), which, for the simplified installation and removal of the respective container gripper (4, 4a), is held by locking engagement at the transport element (3).

9. Device according to any one of the preceding claims, **characterised in that** the spring elements (14) are spring arms (13), or in each case form at least two spring arms (13a).

10. Device according to claim 9, **characterised in that** the spring arms (13) are connected by a first spring arm end (13.1) in each case to a gripper arm (5), and in each case are in contact by a second spring arm end (13.2) against the control surface of a control element or blocking element (15), wherein the spring arms (13) are double-armed spring arms, which are held such as to be pivotable between their spring arm ends (13.1, 13.2), and specifically in each case about an axis which is coaxial with the pivot axis (6) of the associated gripper arm (5) or at a common jointed bolt (6) with the associated gripper arm (5).

11. Device according to claim 9, **characterised in that** the spring arms (13a) are in contact with a first region or a surface (13a,2.1), formed at a spring arm end (13a.2), in each case against the control surface of a control element and/or a blocking element (15), and, with a second region or a second surface (13a.2.2), likewise formed at the spring arm end (13a.2), take effect in each case on a gripper arm (5a), wherein the two regions or surfaces (13a.2.1, 13a.2.2) are provided opposite one another at the spring arm end (13a.2), and wherein the respective spring arm end (13a.2) is configured as being spring-elastic between the regions or surfaces (13a.2.1, 13a.2.2), and specifically by a configuration double-walled configuration forming at least one cut-out opening (20).

12. Device according to any one of the preceding claims, **characterised in that** the gripper arms (5a) are configured in each case at double-armed, with at least two gripper arm sections (5a.1, 5a.2) extending in opposed directions away from a pivot axis (6) of the gripper arms (5a), from which a first gripper arm section (5a.1) is formed for gripping and holding the containers (2), and that the at least one spring element (14a) or its spring arms (13a) interact with the other gripper arm section (5a.2) or a spring element assembly (21) provided at this gripper arm section (5a).

13. Device according to claim 12, **characterised in that** the spring element (14a) is arranged with its spring arm end (13a.2) between the second gripper arm sections (5a.2) or the spring element assemblies (21) of the respective container gripper (4a) located there.

14. Device according to any one of the preceding claims, **characterised in that** the spring element (14a) is formed as one element with two spring arms (13a), and/or that the spring elements (14, 14a) are produced from a spring-elastic plastic or from a spring-elastic metal, and the gripper arms (5, 5a) and/or the control elements or blocking elements (15) are produced from metal or plastic.

15. Device according to any one of the preceding claims, **characterised in that** the transport element (3) is a transport element which can be driven about a vertical machine axis (MA), or a corresponding rotor, and that the control elements or blocking elements (15) are in each case arranged offset radially inwards, related to the machine axis (MA), opposite the pivot axes of the gripper arms (5).

## Revendications

1. Dispositif de transport de contenants (2) avec un élément de transport (3) et avec plusieurs systèmes de préhension de contenant (4, 4a) prévus sur l'élément de transport (3) pour saisir et maintenir les contenants (2), chaque système de préhension de contenant (4, 4a) présentant au moins deux bras de préhension (5, 5a) pouvant pivoter, qui sont précontraints par au moins un élément de ressort (14, 14a) dans une position de fermeture, ainsi qu'au moins un élément de commande ou de blocage (15), lequel forme au moins une surface de commande avec au moins deux sections (15.1, 15.2), sur laquelle les éléments de ressort (14) agissant sur les bras de préhension (5, 5a) prennent appui, et lequel peut être déplacé au moins entre une première position correspondant à un état de déblocage du système de préhension de contenant (4, 4a), l'élément de ressort (14, 14a) respectif prenant appui sur une première section (15.1) de la surface de commande, et une deuxième position correspondant à un état de blocage du système de préhension de contenant (4, 4a), l'élément de ressort (14, 14a) respectif prenant appui en supplément de manière serrée sur une deuxième section (15.2) de la surface de commande, dans lequel
l'élément de commande ou de blocage (15) respectif pouvant être déplacé axialement dans un axe d'élément de blocage (AS) entre la première et la deuxième position, et que les sections (15.1, 15.2) sont prévues de manière à se suivre les unes les autres dans l'axe d'élément de blocage (AS).

2. Dispositif selon la revendication 1, **caractérisé en ce que** les éléments de commande ou de blocage (15) forment sur leurs extrémités tenues à distance les unes des autres en direction de l'axe d'élément de blocage (AS) d'autres surfaces de commande pour des cames de commande (19, 20) non entraînées avec l'élément de transport (3) pour déplacer les éléments de commande ou de blocage (15) entre la première et la deuxième position.

3. Dispositif selon la revendication 1 ou 2, **caractérisé en ce que** seulement un élément de blocage (15) est prévu pour chaque système de préhension de contenant (4, 4a), et que l'au moins un élément de ressort (14, 14a) du système de préhension de contenant (4, 4a) prend appui des deux côtés sur ledit élément de blocage (15), en d'autres termes sur au moins deux zones de l'élément de blocage (15) ou de la surface de commande décalées l'une à l'encontre de l'autre autour de l'axe d'élément de blocage (AS) ou se faisant face l'une l'autre par rapport à l'axe d'élément de blocage (AS).

4. Dispositif selon l'une quelconque des revendications précédentes, **caractérisé en ce que** les axes d'élément de blocage (AS) sont orientés de manière parallèle ou de manière sensiblement parallèle par rapport aux axes de pivotement des bras de préhension (5).

5. Dispositif selon l'une quelconque des revendications précédentes, **caractérisé en ce que** les bras de préhension (5, 5a) de chaque système de préhension de contenant (4, 4a) présentent sur une extrémité un logement de contenant pour saisir et maintenir le contenant (2) respectif,
et que la zone de commande (15.1 ― 15.3) de l'au moins un élément de commande ou de blocage (15) de chaque système de préhension de contenant (4) se trouve sur le côté, opposé au logement de contenant, d'axes de pivotement (6) des bras de préhension (5, 5a).

6. Dispositif selon l'une quelconque des revendications précédentes, **caractérisé en ce que** l'élément de commande ou de blocage est un boulon de commande ou de blocage (15).

7. Dispositif selon l'une quelconque des revendications précédentes, **caractérisé en ce que** la deuxième section (15.2) de la surface de commande présente une distance plus grande par rapport à l'axe d'élément de blocage (AS) que la première section (15.1) de ladite surface de commande, dans lequel la première section (15.1) est une section de forme cylindrique circulaire ou sensiblement de forme cylindrique circulaire avec un diamètre plus petit et la deuxième section (15.2) est une section de forme cylindrique circulaire ou sensiblement de forme cylindrique circulaire avec un diamètre agrandi.

8. Dispositif selon l'une quelconque des revendications précédentes, **caractérisé en ce que** les deux bras de préhension (5, 5a) de chaque système de préhension de contenant (4, 4a) sont montés de manière à pouvoir pivoter respectivement sur un boulon d'articulation (6) propre, et que les boulons d'articulation (6) sont maintenus dans un logement commun (8), lequel est maintenu par enclenchement sur l'élément de transport (3) pour le montage et le démontage simplifiés du système de préhension de contenant (4, 4a) respectif.

9. Dispositif selon l'une quelconque des revendications précédentes, **caractérisé en ce que** les éléments de ressort (14) sont des bras de ressort (13) ou forment respectivement au moins deux bras de ressort (13a).

10. Dispositif selon la revendication 9, **caractérisé en ce que** les bras de ressort (13) sont reliés à une première extrémité de bras de ressort (13.1) avec respectivement un bras de préhension (5) et reposent par une seconde extrémité de bras de ressort (13.2) respectivement contre la surface de commande d'un élément de commande ou de blocage (15), dans lequel les bras de ressort (13) sont des bras de ressort à deux bras, qui sont maintenus de manière à pouvoir pivoter entre leurs extrémités de bras de ressort (13.1, 13.2), à savoir autour de respectivement un axe coaxial avec l'axe de pivotement (6) du bras de préhension (5) associé ou sur un boulon d'articulation (6) commun avec le bras de préhension (5) associé.

11. Dispositif selon la revendication 9, **caractérisé en ce que** les bras de ressort (13a) reposent par une première zone ou une première surface (13a.2.1) réalisée sur une extrémité de bras de ressort (13a.2) respectivement contre la surface de commande d'un élément de commande et/ou de blocage (15) et agissent respectivement sur un bras de préhension (5a) par une seconde zone ou une seconde surface (13a.2.2) également réalisée sur l'extrémité de bras de ressort (13a.2), dans lequel les deux zones ou surfaces (13a.2.1, 13a.2.2) sont prévues de manière à se faire face l'une l'autre sur l'extrémité de bras de ressort (13a.2) et dans le cas présent, l'extrémité de bras de ressort (13a.2) respective est réalisée de manière élastique comme un ressort entre lesdites zones ou surfaces (13a.2.1, 13a.2.2), à savoir par une réalisation à double paroi formant au moins un évidement (20).

12. Dispositif selon l'une quelconque des revendications précédentes, **caractérisé en ce que** les bras de préhension (5a) sont réalisés respectivement à double bras avec au moins deux sections de bras de préhension (5a.1, 5a.2) s'étendant à l'opposé de manière à s'éloigner d'un axe de pivotement (6) des bras de préhension (5a), dont une première section de bras de préhension (5a.1) est réalisée pour saisir et maintenir les contenants (2), et que l'au moins un élément de ressort (14a) ou ses bras de ressort (13a) coopèrent avec l'autre section de bras de préhension (5a.2) ou un système d'éléments de ressort (21) prévu sur ladite section de bras de préhension (5a).

13. Dispositif selon la revendication 12, **caractérisé en ce que** l'élément de ressort (14a) est disposé par son extrémité de bras de ressort (13a.2) entre les deuxièmes sections de bras de préhension (5a.2) ou les systèmes d'éléments de ressort (21) ici situés du système de préhension de contenant (4a) respectif.

14. Dispositif selon l'une quelconque des revendications précédentes, **caractérisé en ce que** l'élément de ressort (14a) est réalisé d'un seul tenant avec deux bras de préhension (13a), et/ou que les éléments de ressort (14, 14a) sont fabriqués à partir d'une matière plastique élastique comme un ressort ou à partir d'un métal élastique comme un ressort, les bras de préhension (5, 5a) et/ou les éléments de commande ou de blocage (15) sont fabriqués à partir de métal ou de matière plastique.

15. Dispositif selon l'une quelconque des revendications précédentes, **caractérisé en ce que** l'élément de transport (3) est un élément de transport pouvant être entraîné en rotation autour d'un axe de machine vertical (MA) ou un rotor correspondant, et que les éléments de commande ou de blocage (15) sont disposés de manière décalée radialement vers l'intérieur respectivement par rapport à l'axe de machine (MA) par rapport aux axes de pivotement des bras de préhension (5).
